Europäisches Patentamt

European Patent Office

Office européen des brevets

(11) Publication number: **0 148 779**
**B1**

(12) **EUROPEAN PATENT SPECIFICATION**

(45) Date of publication of patent specification: **17.11.88**

(51) Int. Cl.⁴: **C 21 B 3/06**

(21) Application number: **85300139.4**

(22) Date of filing: **09.01.85**

(54) **Slag disposal method.**

(30) Priority: **10.01.84 JP 2319/84**
**10.01.84 JP 2321/84**

(43) Date of publication of application:
**17.07.85 Bulletin 85/29**

(45) Publication of the grant of the patent:
**17.11.88 Bulletin 88/46**

(84) Designated Contracting States:
**DE FR GB IT NL**

(56) References cited:
**FR-A-1 455 828**
**FR-A-2 167 694**
**US-A-3 049 305**
**US-A-3 081 954**
**US-A-3 165 268**
**US-A-3 178 122**

(73) Proprietor: **KAWASAKI JUKOGYO KABUSHIKI KAISHA**
**1-1 Higashikawasaki-cho 3-chome**
**Chuo-ku Kobe-shi Hyogo-ken (JP)**

(73) Proprietor: **ISHII SYOJI LTD.**
**25-13, Horikiri 7-chome Katsushika-ku**
**Tokyo (JP)**

(72) Inventor: **Imai, Keiji**
**2553-15, Oaza Fukawa-Shimoyashiki Tonemachi**
**Kitasoma-gun Ibaraki-ken (JP)**
Inventor: **Nagaoka, Shigenori**
**17-102, Kashiwadai 1-chome**
**Chiba-shi (JP)**
Inventor: **Kogumazaka, Shinji**
**9-1-45, Miyama 9-chome**
**Funabashi-shi (JP)**
Inventor: **Imagawa, Takeshi**
**2476-38, Oaza Fukawa Tonemachi**
**Kitasoma-gun Ibaraki-ken (JP)**
Inventor: **Ishii, Hidenaga**
**2-8 Nishikameari 3-chome**
**Katsushika-ku Tokyo (JP)**
Inventor: **Kikuchi, Toshitsugu**
**5567-8, Kuragano**
**Takasaki-shi (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 148 779 B1**

74 Representative: **Nettleton, John Victor et al**
**Abel & Imray Northumberland House 303-306**
**High Holborn**
**London, WC1V 7LH (GB)**

## Description

The present invention relates to a method of disposing of various kinds of slag produced in iron and steel making processes and, more particularly, to a slag disposal method which permits efficient recovery of concentrates rich in iron for further use in the iron or steel making processes.

Hitherto, most slag produced in a furnace such as a blast furnace, a converter, and an electric furnace, used in an iron or steel making process has been wasted.

In recent years, however, attempts have been made to recover the iron component in the slag and to use slag as an aggregate, partly because of difficulty in finding the area to be reclaimed and partly because of the demand for effective use of mineral resources.

More specifically, it has been proposed to recover the iron content in the form of concentrates by magnetic sorting, for further use in iron or steel making processes. It has been attempted also to increase the iron content of the concentrates for use in iron or steel making process, through grinding by means of a rod mill or an autogenous grinding mill. This proposal and attempt are disclosed, for example, in Japanese Patent Publication No. 33047/1976, Japanese Patent Laid-Open No. 147416/1976, Japanese Patent Laid-Open No. 151615/1976 and Japanese Patent Laid-Open No. 33163/1977.

The hitherto known prior art in this field of technology can be roughly summarized as follows.

(1) The maximum size of the slag to be disposed is usually 300 mm, although it reaches 500 mm in some special cases.

(2) Slag not greater than 300 mm and having high iron content of 50 to 60% is usually used as the concentrates as it is or after increasing the iron content up to 90% or higher by a rod mill or an autogenous grinding mill.

(3) Slag not greater than 300 mm and having low iron content is subjected to magnetic sorting and sieving after crushing so as to be used as concentrates directly or after increase of the iron content through grinding by means of a rod mill or an autogenous grinding mill.

(4) Slag greater than 500 mm is sorted by means of a lifting magnet or by a visual check and only the portion having a low iron content is subjected to crushing into a size not greater than 300 mm and is then subjected to various disposal treatments.

(5) Slag greater than 300 mm and having high iron content is often piled without any treatment and is disposed of in the following ways by professional undertakers specialized in slag disposal.

   (a) By dropping a weight of 2 to 5 tons
   (b) By cutting the slag by a gas burner
   (c) By breaking the slag by dynamite after drilling
   (d) By foaming numerous cross-shaped holes and driving steel piles into the holes.

Thus, the disposal of slag greater than 300 mm and rich in iron content conducted by professional undertakers requires quite inefficient human labour and suffers from danger owing to scattering of slag and iron fragments.

Under these circumstances, there is an increasing demand for development of a method which permits an efficient disposal of a mass of slag and recovery of concentrates for further use in iron or steel making process.

To cope with this demand, the present inventors have conducted various studies and experiments to find out a method which affords an efficient disposal of the slag. In one experiment, compressive force was applied to slag greater than 500 mm in size and having a high iron content to obtain the following result.

(1) In the case of pig iron, even the slag portions having iron content approximating 100% was roughly crushed and separated from the pig iron itself and from the slag involved with the pig iron. The slag attaching to the pig iron or involved with the pig iron had sizes which ranged in a rather smaller part of the size distribution of the roughly crushed pig iron.

(2) In case of steel, slag attaching to the steel or involved with the steel were separated as a result of deformation of the steel by compressive force. Slag was separated also from thin portions of the steel and from the defective part such as concavities and convexities in the steel surface or shrinkage holes in the steel.

(3) The iron content of the slag roughly separated in (1) and (2) above was increased without exception. In some cases, an iron content as high as 90% or higher was obtained.

In general, it is considered that metal in slag cannot be crushed and separated. As a matter of fact, however, metal in slag exists not in such a homogeneous state as in the case of steel sheets, cast steel and cast iron but has many surface convexities and concavities, as well as cracks. In some cases, casting defects such as shrinkage holes and blow holes are involved. Therefore, when compressive force is applied to metal in slag, compressive stresses are concentrated to these surface and internal defects so that the metal can be crushed by a force at a level which is a fraction of the compression strength peculiar to the metal. It is clear also that, since the metal slag is involved with the metal, the force necessary for the crushing becomes small if the ratio of the cross-sectional area of the slag to the whole crushing cross-sectional area is large.

US—A—3 081 954 discloses a method for recovering reusable metallics from steel making slag and refuse. Slag and refuse are subjected to an initial coarse size separation, the resultant smaller size component is magnetically separated to provide a charge having a perceptible metal content, the charge is subjected to violent tumbling and impacting, and the tumbled and impacted charge is separated according to particle size whereby the larger metallic pieces are removed from smaller particles of crushed slag and smaller metal pieces. Thereafter, the smaller particle content of the charge is further tumbled and impacted, separated into a plurality of size classifications, and each classification magnetically separated.

FR—A—1 455 828 discloses a method of separating basic slag comprising grinding the slag, magnetically separating the ground slag into a portion rich in iron and a portion rich in phosphorus, and, after elimination of ferro-magnetic material, sorting the ground slag by size, and subjecting the sorted ground slag to magnetic separation.

The present invention has as an object the provision of a method of disposing of slag which permits efficient recovery of concentrates rich in iron for further use in an iron or steel making process.

The present invention provides a slag disposal method for disposing of slag produced in a furnace during an iron or steel making process, the method comprising:

magnetically sorting, into slag having an iron content above 50 to 60 percent and slag having an iron content below 50 to 60 percent, only those masses of crude slag which have a size greater than a value in the range 300 to 500 millimetres;

applying a compressive force to the magnetically-sorted slag with an iron content above 50 to 60 percent so as to reduce the size of the slag below the said size value;

magnetically sorting, into slag having an iron content above 50 to 60 percent and slag having an iron content below 50 to 60 percent, the slag of reduced size resulting from the application of a compressive force;

grinding magnetically-sorted slag of reduced size having an iron content above 50 to 60 percent obtained from the last-mentioned step of magnetic sorting;

sieving the ground slag with a screen having a predetermined mesh size such as to separate the ground slag into slag of size less than about 40 millimetres and concentrates of high iron content of size greater than about 40 millimetres; and

collecting the concentrates for further use in an iron or steel making process.

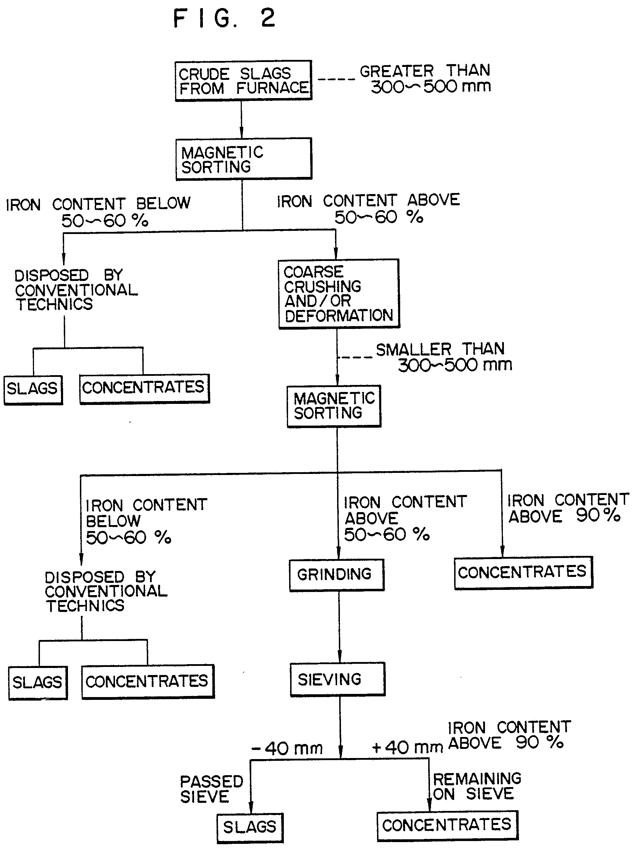

One way of carrying out the invention is described in detail below with reference to Figure 2 of the accompanying drawings, in which:

Figure 1 is a flow chart of a slag disposal method; and

Figure 2 is a flow chart of a slag disposal method in accordance with the invention.

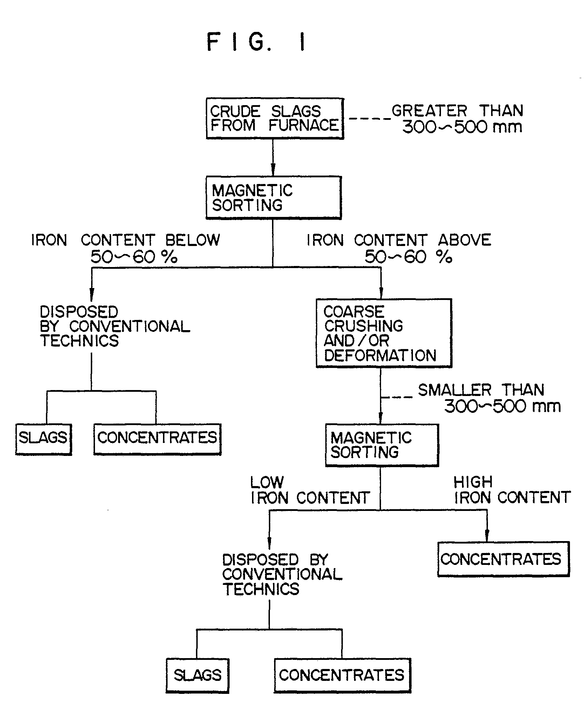

Referring first to Figure 1, masses of crude slag having sizes ranging between 300 and 500 mm, produced in a blast furnace, converter or an electric furnace in an iron or steel making process, are subjected to a first sorting conducted by a magnetic sorter into slags rich in iron having an iron content higher than 50 to 60% and slags not rich in iron having an iron content lower than 50 to 60%. The slag rich in iron having an iron content higher than 50 to 60% is then fed to a crusher which applies a compressive force to the slag to coarsely crush or deform this slag into sizes smaller than 300 to 500 mm while separating a part of the slag to enhance the iron content. On the other hand, the slag not rich in iron having an iron content lower than 50 to 60% is crushed by a compression crusher (rocking crusher) of the same type as that used in ordinary technic such as used in rock crushing.

The coarsely crushed and deformed slag having reduced sizes and increased iron content is then subjected to a second magnetic sorting so as to be further sorted into slag having high iron content and slag having low iron content. The slag having high iron content are then collected and used as concentrates for use in an iron or steel making process, while the slag having low iron content is disposed of by the ordinary technic mentioned above.

In consequence, the slag greater than 300 to 500 mm in size and having an iron content of 50 to 60% is continuously and efficiently crushed into sizes below 300 to 500 mm, while the iron content of this slag is increased effectively, and this slag collected so as to be used as concentrates for further use in an iron or steel making process.

The inventors have conducted a test in which 100 tons of crude slag obtained from a blast furnace, having sizes above 400 mm and having an iron content of 50 to 60% was disposed by the disposal method just described. As a result, concentrates usable in an iron or steel making process, having sizes below 250 mm and an iron content of 80 to 85%, was recovered at a high efficiency within quite a short time of about 3 hours.

By way of reference, 100 tons of the same crude slag as above, having sizes above 400 mm and an iron content of 50 to 60% was disposed of by a conventional method employing dropping of a weight. It took about 40 hours for the slag to be disposed of satisfactorily. In addition, the work was quite dangerous owing to scattering of fragments of slag and iron.

As will be realized from the foregoing, the slag disposal method just described permits quite an efficient recovery of the concentrates having iron content of 80% or higher from crude slags sized above 300 to 500 mm and having an iron content of 50 to 60%. In addition, the disposal of the slags can be completed in quite a short period of time and, in addition, with an enhanced safety because there is no scattering of slag and iron fragments.

The concentrates as obtained through the slag disposal method just described may be further subjected to a grinding to become concentrates having iron content well exceeding 90%.

Figure 2 shows a slag disposal method in accordance with the invention.

This method employs the same steps down to the crushing and deformation from the first step of preparation of the crude slag, but the second magnetic sorting is conducted in a manner different from that in the method described with reference to Figure 1. Namely, in this method in accordance with the invention, the coarsely crushed and deformed slag having reduced sizes and increased iron content is subjected to a second magnetic sorting so as to be sorted into slag having high iron content above 50 to 60% and slag having low iron content below 50 to 60%, and slag having extremely high iron content of 90% or higher are extracted from the slag having high iron content above 50 to 60%. The extracted slag having an iron content exceeding 90% is collected so as to be used directly as the concentrates in an iron or steel making process. On the other hand, the slag having an iron content less than 90%, i.e. between 50—60% and 90%, is subjected to grinding and the grinding product is sieved by a vibration sieve having a mesh size of 40 mm. As a result, ground material having an iron content exceeding 90% is left on the sieve, and this material is collected as concentrate which is to be used as the material for an iron or steel making process. The slag which have been passed the sieve mesh are wasted because they have quite a small iron content.

Using this embodiment of the invention, a test was conducted to dispose of 100 tons of crude slag obtained from a blast furnace, having sizes above 400 mm and an iron content of 50 to 60%. As a result, concentrates usable in an iron or steel making process, having sizes smaller than 250 mm and an iron content exceeding 90%, were recovered quite efficiently in the short time of about 40 hours.

By way of reference, the same crude slag was disposed of by a conventional method employing dropping of a weight. It took about 50 hours for attaining the same result as above. In addition, the work was quite dangerous owing to scattering of fragments of iron and slag.

Thus, the the invention permits a continuous and highly efficient recovery of concentrates having an iron content exceeding 90%, from crude slag sized between 300 and 500 mm and having an iron content of 50 to 60%. In addition, the disposal is completed in quite a short time, without any danger attributable to the flying of iron and slag fragments.

## Claims

1. A slag disposal method for disposing of slag produced in a furnace during an iron or steel making process, the method comprising:
magnetically sorting, into slag having an iron content above 50 to 60 percent and slag having an iron content below 50 to 60 percent, only those masses of crude slag which have a size greater than a value in the range 300 to 500 millimetres;
applying a compressive force to the magnetically-sorted slag with an iron content above 50 to 60 percent so as to reduce the size of the slag below the said size value;
magnetically sorting, into slag having an iron content above 50 to 60 percent and slag having an iron content below 50 to 60 percent, the slag of reduced size resulting from the application of a compressive force;

grinding magnetically-sorted slag of reduced size having an iron content above 50 to 60 percent obtained from the last-mentioned step of magnetic sorting;
sieving the ground slag with a screen having a predetermined mesh size such as to separate the ground slag into slag of size less than about 40 millimetres and concentrates of high iron content of size greater than about 40 millimetres; and
collecting the concentrates for further use in an iron or steel making process.

2. A method as claimed in claim 1, wherein the step of magnetically sorting the slag of reduced size comprises sorting the slag into slag having an iron content above 50 to 60 percent, slag having an iron content below 50 to 60 percent, and concentrates having an iron content of 90 percent or higher, and the concentrates having an iron content of 90 percent or higher are collected for further use in an iron or steel making process.

## Patentansprüche

1. Verfahren zum Beseitigen von Schlacke, wie sie in einem Ofen bei einem Eisen- oder Stahlherstellprozeß entsteht, umfassend die Schritte:
magnetisches Sortieren nur derjenigen Rohschlackemassen, die eine Größe oberhalb eines Wertes im Bereich von 300 bis 500 mm haben, in Schlacke mit einem Eisengehalt über 50 bis 60% und Schlacke mit einem Eisengehalt unter 50 bis 60%,
Anwenden einer Druckkraft auf die magnetisch sortierte Schlacke mit einem Eisengehalt über 50 bis 60% zur Verringerung der Schlackengröße unter den besagten Größenwert,
magnetisches Sortieren der aus der Anwendung einer Druckkraft resultierenden Schlacke mit verringerter Größe in Schlacke mit einem Eisengehalt über 50 bis 60% und Schlacke mit einem Eisengehalt unter 50 bis 60%,
Mahlen der magnetisch sortierten Schlacke verringerter Größe mit einem Eisengehalt über 50 bis 60%, wie sie aus dem zuletzt genannten magnetischen Sortierschritt erhalten wird,
Sieben der gemahlenen Schlacke mit einem Sieb vorgegebener Maschengröße zum Separieren der gemahlenen Schacke in Schlacke mit einer Größe von weniger als ca. 40 mm und Konzentrate mit hohem Eisengehalt und einer Größe über ca. 40 mm, und
Sammeln der Konzentrate zu weiterer Verwendung in einem Eisen- oder Stahlherstellprozeß.

2. Verfahren nach Anspruch 1, wobei der Schritt des magnetischen Sortierens der Schlacke verringerter Größe ein Sortieren der Schlacke in Schlacke mit einem Eisengehalt über 50 bis 60%, Schlacke mit einem Eisengehalt unter 50 bis 60% und Konzentrate mit einem Eisengehalt von 90% oder mehr umfaßt und die Konzentrate mit einem Eisengehalt von 90% oder mehr zur weiteren Verwendung in einem Eisen- oder Stahlherstellprozeß gesammelt werden.

**Revendications**

1. Procédé de traitement des scories pour traiter les scories produites dans un four au cours d'un procédé d'élaboration de fer ou d'acier, comprenant les étapes consistant:

—à trier par voie magnétique, en scories ayant une teneur en acier au-dessus de 50 à 60% et en scories ayant une teneur en fer en dessous de 50 à 60%, seulement celles des masses de scories brutes qui ont des dimensions plus grandes qu'une valeur comprise dans une gamme allant de 300 à 500 mm;

—à appliquer une force de compression aux scories triées par voie magnétique ayant une teneur en fer au-dessus de 50 à 60% de manière à réduire la dimension des scories en dessous de ladite valeur;

—à trier par voie magnétique, en scories ayant une teneur en fer au-dessus de 50 à 60% et en scories ayant une teneur en fer en dessous de 50 à 60%, les scories de dimensions réduites résultant de l'application d'une force de compression;

—à broyer les scories triées magnétiquement de dimensions réduites ayant une teneur en fer au-dessus de 50 à 60% obtenues dans l'étape précédente de tri magnétique;

—à tamiser les scories broyées au moyen d'un écran ayant des mailles de dimensions prédéterminées de manière à séparer les scories broyées en scories de dimensions inférieures à 40 mm et en concentrés de haute teneur en fer de dimensions supérieures à 40 mm; et

—à recueillir les concentrés pour une utilisation ultérieure dans un procédé d'élaboration de fer ou d'acier.

2. Procédé selon la revendication 1, caractérisé en ce que l'étape de tri magnétique des scories de dimensions réduites consiste à trier les scories en scores ayant une teneur en fer au-dessus de 50 à 60%, en scories ayant une teneur en fer en dessous de 50 à 60%, et les concentrés ayant une teneur en fer égale ou supérieure à 90% sont recueillis pour une utilisation ultérieure dans un procédé d'élaboration de fer ou d'acier.

# F I G. I

```
┌─────────────────┐
│ CRUDE  SLAGS    │ ──── GREATER  THAN
│ FROM  FURNACE   │        300~500 mm
└─────────────────┘
         │
         ▼
┌─────────────────┐
│ MAGNETIC        │
│ SORTING         │
└─────────────────┘
```

IRON  CONTENT  BELOW          IRON  CONTENT  ABOVE
        50~60 %                        50~60 %

```
DISPOSED                        ┌──────────────┐
BY CONVENTIONAL                 │ COARSE       │
TECHNICS                        │ CRUSHING     │
                                │ AND / OR     │
                                │ DEFORMATION  │
                                └──────────────┘
                                       │ ─── SMALLER  THAN
                                       │        300~500 mm
                                       ▼
┌───────┐  ┌──────────────┐     ┌──────────────┐
│ SLAGS │  │ CONCENTRATES │     │ MAGNETIC     │
└───────┘  └──────────────┘     │ SORTING      │
                                └──────────────┘
```

     LOW                              HIGH
IRON  CONTENT                     IRON  CONTENT

```
                                        ┌──────────────┐
DISPOSED  BY                            │ CONCENTRATES │
CONVENTIONAL                           └──────────────┘
TECHNICS

┌───────┐     ┌──────────────┐
│ SLAGS │     │ CONCENTRATES │
└───────┘     └──────────────┘
```

1

# F I G. 2

CRUDE SLAGS FROM FURNACE ---- GREATER THAN 300~500 mm

↓

MAGNETIC SORTING

IRON CONTENT BELOW 50~60 %          IRON CONTENT ABOVE 50~60 %

DISPOSED BY CONVENTIONAL TECHNICS

SLAGS     CONCENTRATES

COARSE CRUSHING AND/OR DEFORMATION

---- SMALLER THAN 300~500 mm

MAGNETIC SORTING

IRON CONTENT BELOW 50~60 %          IRON CONTENT ABOVE 50~60 %          IRON CONTENT ABOVE 90 %

DISPOSED BY CONVENTIONAL TECHNICS

SLAGS     CONCENTRATES

GRINDING          CONCENTRATES

SIEVING

-40 mm     +40 mm  IRON CONTENT ABOVE 90 %

PASSED SIEVE          REMAINING ON SIEVE

SLAGS          CONCENTRATES